# FASCICULE DE BREVET EUROPEEN

(11) **EP 0 346 233 B1**
(45) Date de publication et mention de la délivrance du brevet: **26.05.1993**
(21) Numéro de dépôt: 89401592.4
(22) Date de dépôt: 08.06.1989
(51) Int. Cl.: G21F 9/36, G21C 19/36

(54) **Dispositif de compactage de squelette d'assemblage combustible nucléaire**
Verfahren zum Verdichten des Skeletts einer nuklearen brennbaren Zusammenstellung
Process for compacting the skeleton of a nuclear fuel assembly

(30) Priorité: 10.06.1988 FR 8807795
(43) Date de publication de la demande: 13.12.1989
(73) Titulaire: FRAMATOME, 92400 Courbevoie (FR)
(72) Inventeur: Beneck, Jean-Albert, F-94490 Ormesson (FR); Quayre, Claude, F-93360 Neuilly Plaisance (FR)
(74) Mandataire: Fort, Jacques

(56) Documents cités:
- EP-A- 0 081 074
- EP-A- 0 113 448
- FR-A- 2 556 489
- FR-A- 2 600 202

## Description

La présente invention concerne de façon générale la réduction du volume occupé par les constituants d'assemblages combustibles nucléaires usés par suite de leur passage en réacteur, en vue de leur stockage.

Ces assemblages comprennent en général un faisceau de crayons combustibles et un squelette composé de deux embouts reliés par des tubes-guides et de grilles réparties le long des tubes-guides et délimitant des alvéoles de retenue des crayons.

Il a été déjà proposé (FR-A-2 586 854) une installation permettant de démanteler un assemblage par tronçonnage des tubes-guides au dessous d'un des embouts, puis enlèvement des crayons et réduire le volume occupé par ces derniers en les regroupant en une "botte" de crayons jointifs.

Il est également souhaitable de réduire le volume occupé par le squelette en vue du stockage de ce dernier pendant le temps de désactivation requis.

On connaît pour cela des dispositifs permettant d'écraser latéralement le squelette.

On connaît également un dispositif de compactage conforme au préambule de la revendication 1.

La chambre du dispositif de ce type décrit dans le document FR-A-2 538 939 est prévue pour recevoir et compacter des tronçons successifs du squelette, obtenus par cisaillage des tubes-guides. Chaque tronçon à son tour est écrasé contre l'organe amovible constitué par un coulisseau métallique formant le fond de la chambre de compression. Ce coulisseau est retiré une fois plusieurs tronçons écrasés les uns sur les autres par le vérin et le squelette ainsi compacté est recueilli dans un récipient de stockage.

Ce dispositif connu présente des inconvénients. Le compactage d'un squelette exige de nombreuses opérations successives (mise en place du squelette, cisaillage pour constituer un premier tronçon, compactage du tronçon, cisaillage et compactage des tronçons ultérieurs, recueil du squelette compacté). Le processus est long. Les opérations sont complexes, puisque les tronçons autres que le premier doivent être compactés sur le ou les tronçons déjà écrasés. La commande à distance du dispositif, placé dans une fosse remplie d'eau, est complexe. Le cisaillage en tronçons crée des fragments, débris et limailles importants.

On connaît enfin (FR-A-2 600 202) un dispositif destiné à regrouper les crayons de combustible d'un assemblage en les chassant hors du squelette et en les mettant en botte.

Le dispositif vise à fournir un dispositif de compactage du type ci-dessus défini ayant une constitution simple, permettant de compacter un squelette en un nombre minimum d'opérations pour réduire le temps nécessaire et augmenter le rendement.

Dans ce but l'invention propose un dispositif dans lequel la chambre de compactage est de longueur suffisante pour recevoir un assemblage non tronçonné et est munie à l'extrémité opposée à celle équipée du vérin de compactage, d'un équipage comportant une boîte de réception constituant ledit organe mobile et déplaçable transversalement à la chambre entre une position permettant d'introduire un squelette dans la chambre de compactage et une position où la boîte de réception est alignée avec la chambre de compactage.

L'équipage est déplaçable vers une position où la boite de réception est alignée avec un étui de stockage. Le fond de la boîte porte le vérin d'éjection du squelette comprimé vers l'étui. La position dans laquelle l'équipage permet l'éjection du squelette peut être celle qui autorise l'introduction d'un nouveau squelette dans la chambre de compactage, ce qui permet d'effectuer simultanément l'éjection d'un squelette écrasé et l'introduction d'un nouveau squelette à compacter.

L'invention sera mieux comprise à la lecture de la description qui suit d'un dispositif constituant un mode particulier de réalisation, donné à titre d'exemple non limitatif. La description se réfère aux dessins qui l'accompagnent, dans lesquels :
- la figure 1 est une vue en élévation et en coupe partielle d'un dispositif dont l'équipage est représenté dans la position pour laquelle la chambre et le vérin de compactage sont alignés,
- les figures 2 et 3 montrent le dispositif de la figure 1, respectivement en vue de dessus et en coupe suivant la ligne III-III,
- les figures 4A à 4E sont des vues schématiques en coupe suivant un plan vertical montrant les positions successives prises par les composants du dispositif de la figure 1 lors de la mise en oeuvre.

Le dispositif qui sera décrit à titre d'exemple est destiné à compacter des squelettes 10 d'assemblages de réacteur à eau sous pression démunis d'un des embouts terminaux, se réduisant donc à un embout 12, des tubes-guides et des grilles 14. Les tubes-guides sont en général constitués d'alliage à base de zirconium, ainsi que les grilles, exception faite de la grille la plus proche de l'embout restant, souvent en alliage résistant dit "INCONEL".

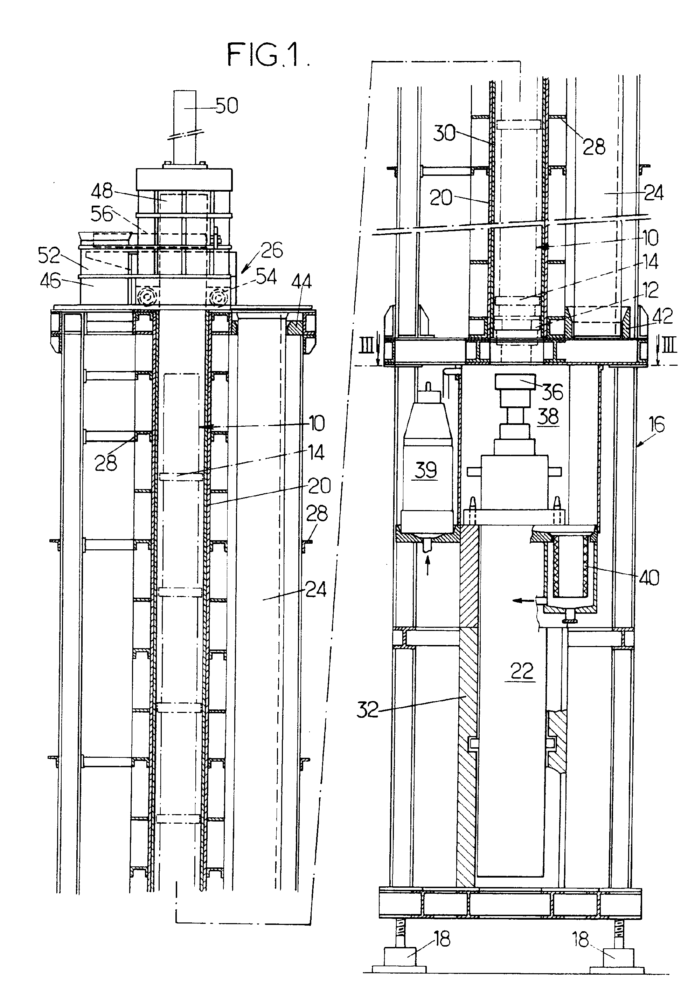

Le dispositif de compactage est prévu pour être placé sur le fond d'une piscine de désactivation ou de la fosse de chargement d'une centrale nucléaire. Le dispositif montré en figures 1 à 3 peut être regardé comme comprenant un châssis 16 en profilés d'acier inoxydable, muni de pieds réglables 18 d'appui sur le fond de la piscine. A ce châssis sont fixés rigidement une chambre de compactage 20, un vérin hydraulique de compactage 22, les composants d'une installation de filtration et des moyens de réception d'un étui 24 de stockage. Sur des rails prévus à la partie supérieure du châssis peut se déplacer horizontalement un équipage mobile 26. Ces divers composants seront successivement décrits.

La chambre de compactage 20 est constituée par un tube de section carrée, en acier inoxydable, ayant une longueur légèrement supérieure à celle du squelette 10 à compacter. Ce tube est renforcé par des entretoises 28 réparties sur toute sa longueur pour lui permettre de résister aux efforts transmis par le squelette lors du compactage, sous un effort longitudinal de l'ordre de 30 000 DaN. Pour éviter que la paroi du tube ne soit rayée lors du compactage, elle peut être intérieurement d'une couche 30, généralement de 5 à 15 mm d'épaisseur, d'un matériau de dureté supérieure à celle des éléments du squelette. Lorsque un ou plusieurs de ces éléments sont en un alliage dur fer-chrome-nickel, par exemple en INCONEL, et non pas en alliage à base de zirconium, on pourra utiliser une couche 30 en INCONEL 718 de grande dureté.

Les dimensions intérieures de la chambre 20 doivent être telles que les grilles 14 soient guidées lors de la compression: on verra plus loin que le compactage est arrêté à un point tel que les grilles ne subissent que peu de déformation, alors que les tubes-guides se plient en accordéon sur eux-mêmes. La longueur du squelette peut passer d'environ 3,70-4,50 m à 500-600 mm au cours de l'opération de compactage.

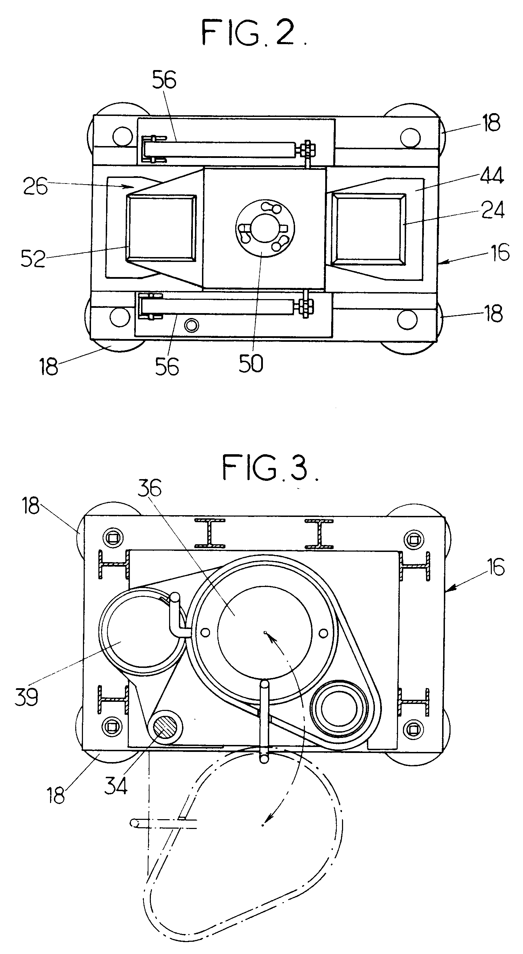

Le vérin de compactage 22 est placé sous la chambre de compactage 20 et il est aligné avec elle. Pour permettre l'extraction et l'entretien du vérin 22, celui-ci n'est pas directement fixé au châssis 16 mais placé dans un carter 32 pouvant tourner autour d'une broche verticale 34 fixée au châssis (figure 3). Le vérin peut ainsi être amené dans la position où il est schématisé en traits mixtes sur la figure 3 qui permet son extraction. Le piston du vérin porte un fouloir 36 destiné à prendre appui sur l'embout inférieur du squelette à compacter.

L'installation de filtration destinée à retenir les fragments détachés lors du compactage fonctionne en circuit fermé. Elle comprend une pompe 39 munie d'une canalisation d'aspiration d'eau dans le compartiment du filtre 40 ménagé au dessous de la chambre de compactage 20, autour de la tige du vérin de compactage 22. Cette eau filtrée est refoulée dans la partie supérieure du compartiment 38. Les fragments détachés lors du compactage restent dans le filtre 40 où il seront récupérés. L'eau contenue dans la chambre de compactage 20 assure une lubrification lors de la compression du squelette 10.

Les moyens de réception de l'étui de stockage 24 comportent, dans le mode de réalisation montré en figures 1 et 2, un socle inférieur 42 et un guide 44. Ces moyens sont prévus pour recevoir un étui 24 de section interne carrée légèrement supérieure à celle de la chambre de compactage 20, afin d'éviter toute difficulté d'introduction des squelettes compactés dont les grilles auraient été déformées. Cet étui 24 est en acier inoxydable, d'épaisseur faible puisqu'il n'a pas à supporter des contraintes. Il a avantageusement la même longueur que la chambre de compactage et il est placé à côté de celui-ci : du fait de la réduction d'encombrement longitudinal d'un squelette lors du compactage, chaque étui 24 est généralement prévu pour recevoir 6 à 10 squelettes.

L'équipage mobile 26 peut être regardé comme comprenant un tiroir 46 de rigidité suffisante pour lui permettre d'encaisser les efforts de compression. Au tiroir est fixée une boîte de réception 48 dont les deux extrémités sont ouvertes. Cette boîte, de longueur supérieure à celle du squelette compacté, peut avoir une constitution similaire à celle de la chambre de compactage 20. Elle est fermée en haut par le piston d'un vérin hydraulique d'éjection 50 dont le corps est fixé au tiroir 46. Pratiquement, sa longueur sera généralement comprise entre 1/6 et 1/10 de celle de la chambre de compactage.

Le tiroir 46 porte également des moyens de guidage d'un squelette destinés à faciliter la descente d'un squelette dans la chambre de compactage 20. Les moyens montrés en figures 1 et 2 sont constitués par une gaine verticale 52, parallèle à la boîte 48. La distance entre les axes de la gaine 52 et de la boîte 48 est égale à la distance entre les axes de la chambre de compactage 20 et de l'étui 24. Ainsi, lorsque le chariot, muni de roues 54 circulant sur des rails appartenant au châssis, est déplacé vers la droite à partir de la position montrée en figure 1, jusqu'à un emplacement où la gaine 52 est alignée avec la chambre de compactage 20, la boite 48 s'aligne avec l'étui 24.

Le déplacement du chariot entre ces deux positions de travail est par exemple commandé par des vérins 56.

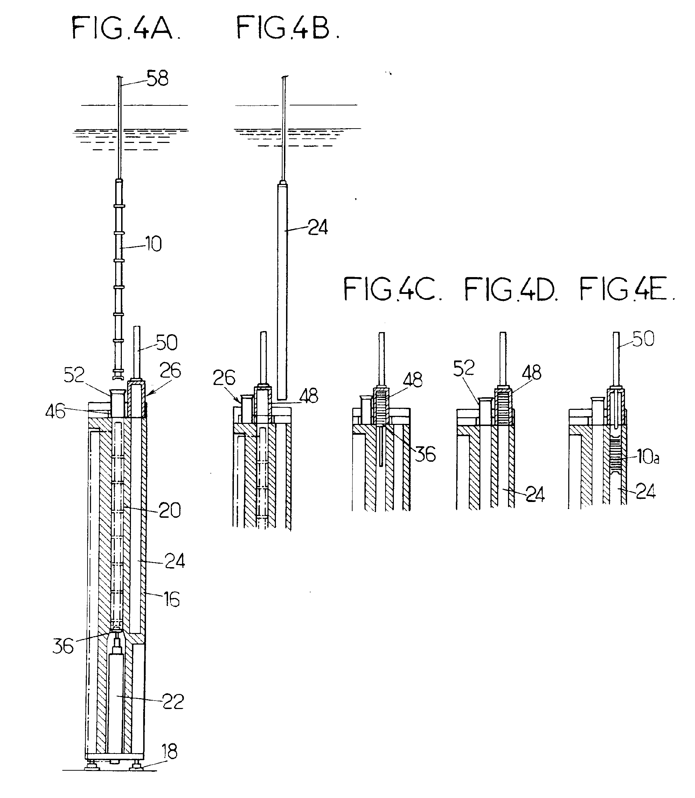

La séquence de mise en oeuvre du dispositif qui vient d'être décrit peut être celle schématisée sur les figures 4A à 4E.

Un squelette 10 à compacter est amené au dessus de la chambre de compactage 20 à l'aide d'un outil de manutention 58, comportant par exemple un jeu de trois plaques pouvant s'enfiler sur les extrémités supérieures des tubes-guides et déplacées horizontalement les unes par rapport aux autres pour les enserrer. L'équipage mobile 26 étant dans la position montrée en figure 4A, le squelette 10 est descendu jusqu'à la position montrée en traits mixtes où il s'appuie sur le fouloir 36 du vérin de compactage 22.

L'équipage mobile 26 est alors déplacé pour amener la boîte de réception 48 en face de la chambre de compactage 20. Dans cette position, un étui de stockage 24 peut être descendu dans le châssis (figure 4B).

Le vérin de compactage 22 est mis en action et refoule en totalité le squelette dans la boîte de réception 48, de longueur appropriée (figure 4C). Les squelettes d'assemblage couramment utilisés à l'heure actuelle dans les réacteurs à eau sous pression peuvent être réduits à une longueur d'environ 500 mm. Le piston du vérin est rétracté et la boîte de réception est amenée face à l'étui 24 (figure 4D). Le vérin d'éjection 50 est alimenté et chasse le squelette compacté 10a dans l'étui 24 (figure 4E). La séquence est répétée sur 6 à 10 squelettes compactés. Chaque fois, le vérin 50 refoule le squelette compacté, en repoussant les squelettes compactés déjà en place vers le fond de l'étui 24 si nécessaire. On évacue ensuite l'étui de stockage 24 que l'on remplace par un étui vide.

On voit que l'opération de compactage axial d'un squelette s'effectue en une seule opération, d'où un gain de temps. L'étui de stockage étant placé à côté de la chambre de compactage, les manipulations sont réduites au minimum. Les mécanismes nécessaires se réduisent au vérin de compactage 22, au vérin d'éjection 50 et aux vérins 56 de déplacement de l'équipage mobile. Les appareils nécessaires pour introduire le squelette dans la chambre de compactage et pour amener et enlever l'étui de stockage peuvent être ceux de toute façon nécessaires au fonctionnement de la centrale. Le dispositif dans son ensemble peut être déplacé aisément d'un site à un autre.

## Revendications

1. Dispositif de compactage de squelette d'assemblage combustible nucléaire démuni de crayons de combustible, comprenant une chambre verticale de compactage (20) de section droite correspondant à celle d'un assemblage, munie de moyens d'introduction de squelette et d'un vérin (22) de compression longitudinale et d'écrasement du squelette contre un organe mobile fermant une extrémité de la chambre,
caractérisé en ce que la chambre de compactage (20) est de longueur suffisante pour recevoir un squelette non tronçonné et est munie, à l'extrémité opposée à celle équipée du vérin de compactage (22), d'un équipage (26) comportant une boîte de réception constituant ledit organe mobile et déplaçable transversalement à l'axe de la chambre entre une position permettant l'introduction d'un squelette dans la chambre de compactage et une position où la boîte de réception (48), équipée d'un vérin d'éjection (50), est alignée avec la chambre de compactage (20).

2. Dispositif selon la revendication 1, caractérisé en ce que l'équipage mobile est déplaçable dans une position où la boîte de réception est alignée avec un étui (24) de stockage permanent de squelettes complets compactés.

3. Dispositif selon la revendication 2, caractérisé en ce qu'il comprend des moyens (42,44) de réception temporaire de l'étui de stockage (24) dans une position telle que la boîte de réception (48) soit alignée avec l'étui de stockage (24) lorsque des moyens (52) d'introduction de squelette dans la chambre de compactage portés par l'équipage mobile, sont alignés avec la chambre de compression (20).

4. Dispositif selon la revendication 2 ou 3, caractérisé en ce que l'étui de stockage (24) a une section supérieure à celle de la chambre de compactage (20) et a sensiblement la même longueur et en ce que les moyens (42,44) de réception de l'étui maintiennent celui-ci parallèlement à la chambre de compactage (20) et à côté de cette dernière.

5. Dispositif selon l'une quelconque des revendications précédentes, caractérisé en ce que la chambre de stockage est revêtue intérieurement d'une couche de matériau de dureté supérieure à celle des éléments constitutifs du squelette.

6. Dispositif selon l'une quelconque des revendications précédentes, caractérisé en ce qu'il comporte un châssis (16) auquel est fixée rigidement la chambre de compactage (20), muni au dessus de la chambre de rails sur lequel roule l'équipage mobile (26).

7. Dispositif selon l'une quelconque des revendications 1 à 5, caractérisée en ce qu'il comporte un châssis sur lequel est monté de façon amovible le vérin de compactage (22) au dessous de la chambre.

8. Dispositif selon la revendication 7, caractérisé en ce qu'il comprend un carter (32) de réception du vérin de compactage (22), monté sur le châssis de façon à pouvoir tourner autour d'une broche verticale (34) entre une position où le vérin de compactage (22) est aligné avec la chambre de compactage (20) et une position où le vérin est en dehors du châssis.

9. Dispositif selon l'une quelconque des revendications précédentes, caractérisé en ce qu'il comprend une installation de filtrage ayant une pompe (39) aspirant l'eau à partir d'un compartiment (38) communiquant avec la chambre de compression (20), à travers un filtre (40), et refoulant l'eau filtrée à la partie supérieure du compartiment.

## Patentansprüche

1. Vorrichtung zum Verdichten eines Skeletts einer Brennelementkassette, aus der die Brennstäbe entfernt worden sind, mit einer vertikalen Verdichtungskammer (20), die einen Querschnitt aufweist, der dem einer Brennelementkassette entspricht, mit Mitteln zum Einführen des Skeletts und einer Winde (22) zur longitudinalen Verdichtung und zur Quetschung des Skeletts gegen ein bewegliches Organ, das ein Ende der Kammer abschließt,
**dadurch gekennzeichnet,**
daß die Verdichtungskammer (20) eine ausreichende Länge hat, um ein nicht zerschnittenes Skelett aufzunehmen und an dem Ende, das dem mit der Verdichtungswinde (22) versehenen Ende gegenüberliegt, eine Ausrüstung (26) aufweist, mit einem Aufnahmebehälter, der das bewegliche Organ bildet, das quer zur Achse der Kammer zwischen einer Stellung, die die Einführung eines Skeletts in die Verdichtungskammer ermöglicht und einer Stellung, in der der Aufnahmebehälter (48), der mit einem Ausstoßkolben (50) versehen ist, mit der Verdichtungskammer (20) ausgerichtet ist, verschiebbar ist.

2. Vorrichtung nach Anspruch 1,
dadurch gekennzeichnet,
daß die bewegliche Ausrüstung in eine Stellung verschiebbar ist, in der der Aufnahmebehälter mit einer Hülle (24) ausgerichtet ist, die zur permanenten Lagerung der vollständigen verdichteten Skelette dient.

3. Vorrichtung nach Anspruch 2,
gekennzeichnet durch
Mittel (42, 44) zur zeitweisen Aufnahme der Lagerungshülle (24) in einer Stellung, in der der Aufnahmebehälter (48) mit der Lagerungshülle (24) ausgerichtet ist, während die Mittel (52) zur Einführung der Skelette in die Verdichtungskammer, die von der beweglichen Ausrüstung getragen werden, zu der Verdichtungskammer (20) ausgerichtet sind.

4. Vorrichtung nach Anspruch 2 oder 3,
dadurch gekennzeichnet,
daß die Lagerungshülle (24) einen Querschnitt hat, der größer ist als der der Verdichtungskammer (20) und die im wesentlichen die gleiche Länge hat wie die Verdichtungskammer und dadurch, daß die Mittel (42, 44) zur Aufnahme der Hülle diese parallel zur Verdichtungskammer (20) an deren Seite haltern.

5. Vorrichtung nach einem der vorstehenden Ansprüche,
dadurch gekennzeichnet,
daß die Verdichtungskammer innen mit einer Schicht ausgekleidet ist, einer Härte, die größer ist als die der Elemente, aus denen das Skelett besteht.

6. Vorrichtung nach einem der vorstehenden Ansprüche,
gekennzeichnet durch
ein Gestell (16), an dem die Verdichtungskammer (20) starr befestigt ist und das oberhalb der Kammer mit Schienen versehen ist, auf denen die bewegliche Ausrüstung (26) rollt.

7. Vorrichtung nach einem der Ansprüche 1 bis 5,
gekennzeichnet durch
ein Gestell, auf dem abnehmbar die Verdichtungswinde (22) oberhalb der Kammer angebracht ist.

8. Vorrichtung nach Anspruch 7,
gekennzeichnet durch
einen Kasten (32) zur Aufnahme des Verdichtungskolbens (22), der auf dem Gestell derart angeordnet ist, daß er um eine vertikale Spindel (34) drehbar ist, zwischen einer Stellung, in der die Verdichtungswinde (22) mit der Verdichtungskammer (20) ausgerichtet ist und einer Stellung, in der sich die Winde außerhalb des Gestells befindet.

9. Vorrichtung nach einem der vorstehenden Ansprüche,
gekennzeichnet durch
eine Filteranlage mit einer Pumpe (39) zum Ansaugen von Wasser aus einer Kammer (38), die mit der Verdichtungskammer (20) über einen Filter (40) in Verbindung steht und die das gefilterte Wasser in den oberen Teil der Kammer abläßt.

## Claims

1. Device for compacting a nuclear fuel assembly structure devoid of fuel rods, comprising a vertical compacting chamber (20) whose cross-section corresponds to that of an assembly, having means for introducing a structure and a jack (22) for longitudinally compressing the structure against a movable member closing one end of the chamber,
characterized in that the compacting chamber (20) is of sufficient length to receive an uncut structure and is provided, at the end opposite that equipped with the compacting jack (22), with a unit (26) having a reception box constituting said movable member and movable transversely to the axis of the chamber between a position enabling introduction of a structure into the compacting chamber and a position in which the reception box (48) equipped with an ejection jack (50) is aligned with the compacting chamber (20).

2. Device according to claim 1,
characterized in that the movable assembly is movable into a position in which the reception box is aligned with a container (24) for permanent storage of full compacted structures.

3. Device according to claim 2,
characterized in that it comprises means (42,44) for temporarily receiving the storage container (24) in a position such that the reception box (48) is aligned with the storage container (24) when means (52) carried by the movable assembly for introducing the structure into the compacting chamber are in alignment with the compression chamber (20).

4. Device according to claim 2 or 3,
characterized in that the storage container (24) has a cross-section greater than that of the compacting chamber (20) and has substantially the same length and in that the means (42,44) for receiving the container maintain the latter parallel to the compacting chamber (20) and at the side thereof.

5. Device according to any one of the preceding claims,
characterized in that the storage chamber is coated on the inside with a layer of a material of a hardness greater than that of the elements constituting the structure.

6. Device according to any one of the preceding claims,
characterized in that it comprises a frame (16) to which the compacting chamber (20) is rigidly fixed, and which is provided, above the compacting chamber, with rails on which the movable assembly (26) travels.

7. Device according to any one of claims 1 to 5,
characterized in that it comprises a frame on which the compacting jack (22) is removably mounted below the chamber.

8. Device according to claim 7,
characterized in that it comprises a casing (32) for receiving the compacting jack (22), mounted on the frame so as to be able to rotate about a vertical pin (34) between a position in which the compacting jack (22) is aligned with the compacting chamber (20) and a position in which the jack clears the frame.

9. Device according to any one of the preceding claims,
characterized in that it comprises a filtering installation having a pump (39) sucking water from a compartment (38) communicating with the compression chamber (20), through a filter (40), and delivering the filtered water to the upper part of the compartment.
